# EUROPÄISCHE PATENTSCHRIFT

(11) **EP 2 553 393 B1**
(45) Veröffentlichungstag und Bekanntmachung des Hinweises auf die Patenterteilung: **15.06.2016**
(21) Anmeldenummer: 11709700.6
(22) Anmeldetag: 17.03.2011
(51) Int. Cl.: G01C 21/30, G01C 21/26, G01C 21/28

(54) **BEWERTUNG VON KARTENINFORMATIONEN**
ASSESSMENT OF MAP INFORMATIONS
ÉVALUATION DE DONNÉES CARTOGRAPHIQUES

(30) Priorität: 26.03.2010 DE 102010012877
(43) Veröffentlichungstag der Anmeldung: 06.02.2013
(73) Patentinhaber: Continental Automotive GmbH, 30165 Hannover (DE)
(72) Erfinder: STÄHLIN, Ulrich, 65760 Eschborn (DE)
(86) Internationale Anmeldenummer: PCT/EP2011/054023
(87) Internationale Veröffentlichungsnummer: WO 2011/117131

(56) Entgegenhaltungen:
- DE-A1-102005 003 192
- DE-A1-102008 012 697
- DE-A1-102008 046 683
- US-A1- 2008 249 706

## Beschreibung

Die Erfindung betrifft eine Bewertung von Karteninformationen von digitalen Karten mit Hilfe eines Verfahrens zur Erstellung, Speicherung und Weiterverwendung einer digitalen Karte für ein Kraftfahrzeug. Dabei werden Daten zumindest einer ersten Umgebung des Kraftfahrzeugs mittels zumindest einer Ermittlungsvorrichtung des Kraftfahrzeugs erfasst. Aus den ermittelten Daten wird eine digitale Karte einer ersten Umgebung des Kraftfahrzeugs erstellt. Diese digitale Karte wird in einer Speichervorrichtung des Kraftfahrzeugs gespeichert, und die erstellte digitale Karte wird unter Unterstützung mit globalen Nävigationssystemen, wie z. B. GPS, Galileo, GLONASS (Russland), Compass (China), IRNSS (Indien) bewertet und für ein Fahrerassistenzsystem (ADAS) des Kraftfahrzeugs bereitgestellt.

Ein Erstellen einer selbst gelernten Karte auf Basis von Umfeldsensoren in Verbindung mit globalen Navigationssystemen ist aus der Druckschrift DE 10 2009 017 731 A1 bekannt. Außerdem sind bereits Schnittstellen zwischen Navigationssystemen und Fahrerassistenzsystemen (ADAS) bekannt, um das ADAS-System mit Kartendaten zu versorgen. Derartige Schnittstellen werden weiter standardisiert und bedürfen der ständigen Verbesserung oder Implementierung in bestehende Motor-Managementsysteme, um bei elektronisch ermittelter Fahrzeugumgebung den Fahrzeugführer vor Gefahren zu warnen, oder mit Hilfe des Fahrerassistenzsystems (ADAS) bei gefährlichen Kurvenfahrten, Fahrbahnwechsel oder nicht erkanntem Zufahren zu Autobahnausfahrten die Geschwindigkeit automatisch herunterzufahren.

Die DE 10 2008 012 697 A1 beschreibt ein Verfahren zum Betrieb eines Navigationssystems, insbesondere eines Navigationssystems für ein Fahrzeug, bei dem aktuelle Karteninformationen und aktuelle Fahrzeuginformationen erfasst und analysiert, anhand derer eine momentane Streckenposition und/oder ein vorausliegender Streckenverlauf bestimmt werden, wobei anhand eines Vergleichs der aktuellen Fahrzeuginformationen mit den aktuellen Karteninformationen die Qualität der aktuellen Karteninformationen ermittelt wird.; Es wird anhand eines Vergleichs von aktuellen Karteninformationen und damit korrespondierenden aktuellen Fahrzeuginformationen zumindest ein Grad der Qualität der aktuellen Karteninformationen bestimmt, wobei zur Ermittlung der momentanen Streckenposition und/oder des vorausliegenden Streckenverlaufs die aktuellen Karteninformationen entsprechend dem ermittelten Grad der Qualität berücksichtigt werden.

Die Verbindung von Karteninformationen selbst gelernter Kartendaten und sicherheitsrelevanten Maßnahmen durch Fahrerassistenzsysteme wie ADAS erfordern eine kritische und fortlaufende Bewertung, um sicherheitsrelevante Maßnahmen mit dem Fahrbetrieb einleiten zu können, ohne auf Grund dieser elektronischen Maßnahmen das Fahrzeug selbst, die Insassen des Fahrzeugs oder dritte Verkehrsteilnehmer zu gefährden. Auch informelle Daten aus einem Fahrzeug-zu-Fahrzeug- und Fahrzeug-zu-Umgebungsstruktur-Kommunikation (C2X-Kommunikation) in das Fahrerassistenzsystem einzubeziehen und eine Verbindung mit beispielsweise einem Abstandsregelungstempomaten (ACC - Adaptive Cruise Control), einem Radarsensor, einem Lidarsensor bzw. Laserscanner, einer Kamerasensorik und anderer Kommunikationseinheiten für die Bewertung herzustellen, ist ein aktuelles Bedürfnis, um die Datenflut zu kanalisieren und eine sichere Bewertung von Fahrzeugsituationen zu schaffen.

Außerdem sind für das Fahrerassistenzsystem die typischen Daten durch die Fahrzeugsensorik zu berücksichtigen, wie Raddrehzahlen, Gierrate, Lenkradwinkel usw., um sicherheitsrelevante Anwendungen im Fahrzeug zu veranlassen, auszulösen oder einzusetzen.

Aufgabe der Erfindung ist es, diese Dateninformationsflut zu kanalisieren und zu bewerten, um daraus sicherheitsrelevante Maßnahmen, die den Fahrbetrieb des Fahrzeugs betreffen, ableiten zu können.

Diese Aufgabe wird mit dem Gegenstand der unabhängigen Ansprüche gelöst. Vorteilhafte Weiterbildungen der Erfindung ergeben sich aus den abhängigen Ansprüchen.

Gelöst wird diese Aufgabe dadurch, dass neben dem bekannten Herstellen und Bereitstellen einer gelernten digitalen Karte ein elektronischer Horizont bereitgestellt wird, der in ein eigenes Steuergerät im Fahrzeug integriert ist, wobei das Steuergerät die Kartendaten mit den GPS-, Gyroskop- und Raddrehzahlinformationen kombiniert und so die jeweilige Fahrposition genau berechnet und ein virtuelles Straßenbild aufbaut, wobei das jeweils jüngste Datenpaket dafür sorgt, dass das älteste wieder aus dem Speicher des Steuergeräts entfernt wird.

Der elektronische Horizont bietet damit eine Basis digitaler Kartendaten, die eine voraus liegende Strecke sowie deren Topographie bei einer Motorsteuerung berücksichtigt. Auch die Schaltstrategie lässt sich durch den elektronischen Horizont optimieren, indem die Automatik eine voraus liegende Kurve oder eine anstehende Steigung erkennt und entsprechend später in einen höheren Gang schaltet. Weitere Beispiele für Anwendungen für den elektrischen Horizont sind angepasst Strategien bei abstandsabhängigen Tempomaten (ACC, Adaptive Cruise Control), Verkehrszeichenerkennung (Fusion mit Kamera) oder Kurvenwarner (Warnung vor zu hoher Geschwindigkeit vor einer Kurve). Durch den unterstützenden Charakter des elektronischen Horizonts kann der Fahrer somit jederzeit selbst entscheiden, ob er die Empfehlungen des Fahrerassistenzsystems nutzt und so Kraftstoffkosten senkt und sicher fährt und entspannter ans Ziel kommt. Damit unterstützt der elektronische Horizont das Erfassen und Bereitstellen einer selbst erkannten digitalen Karte aufgrund der eigenen Fahrzeugsensorik.

Die Aufgabe zwischen elektronischem Horizont und bereitgestellter digitaler Karte zu entscheiden, wird durch das erfindungsgemäße Bewertungsverfahren zur Erstellung von Weiterverwendung einer digitalen Karte für ein Kraftfahrzeug gelöst, indem die nachfolgenden Verfahrensschritte durchgeführt werden.

Zunächst wird eine digitale Karte und ein erster Vertrauensindikator für die digitale Karte mittels einer entsprechenden Erstellungsvorrichtung des Kraftfahrzeugs bereitgestellt. Zusätzlich wird ein Ermitteln eines zweiten Vertrauensindikators für den elektronischen Horizont durchgeführt. Dann wird eine erste momentane Position des Kraftfahrzeugs ermittelt und Informationen für eine zweite, im Bereich der ersten ermittelten momentanen Position des Kraftfahrzeugs liegende Umgebung des Kraftfahrzeugs bereitgestellt und ein Speichern der Informationen in dem elektronischen Horizont durchgeführt.

Daraufhin erfolgt ein Vergleichen der in dem elektronischen Horizont bereitgestellten Informationen mit der erstellten digitalen Karte im Bereich der zweiten engeren Umgebung des Kraftfahrzeugs. In Abhängigkeit von dem Vergleich der bereitgestellten Informationen mit der erstellten digitalen Karte wird ein Ändern des ersten Vertrauensindikators und des zweiten Vertrauensindikators durchgeführt und somit ein dritter Vertrauensindikator aus dem ersten und dem zweiten Vertrauensindikator ermittelt. Bei erfolgreicher Bewertung durch den dritten Vertrauensindikator wird ein Verwenden der erstellten digitalen Karte und/oder der in dem elektronischen Horizont bereitgestellten Informationen in einem Fahrerassistenzsystem des Kraftfahrzeugs in Abhängigkeit von dem dritten Vertrauensindikator verwendet.

Dieses Verfahren hat den Vorteil, dass nur dann in die Schaltstrategie sowie in das elektronische Energie- und Motor-Managementsystem oder andere Aktoren der Fahrdynamik eingegriffen wird, wenn die eigen erstellten Karteninformationen mit den Informationen aus dem elektronischen Horizont verbunden mit dem höchsten Vertrauensindikator sichergestellt sind, so dass es nicht zu Fehlleistungen des Fahrerassistenzsystems kommt, was verheerende Folgen haben könnte.

Das Bereitstellen der digitalen Karte und des ersten Vertrauensindikators für die digitale Karte wird mit nachfolgenden Verfahrensschritten erreicht. Zunächst werden Daten zumindest einer ersten Umgebung des Kraftfahrzeugs mittels einer Ermittlungsvorrichtung des Kraftfahrzeugs erfasst. Dann wird eine digitale Karte aus den ermittelten Daten der ersten Umgebung des Kraftfahrzeugs erstellt. Anschließend erfolgt das Festlegen eines ersten Vertrauensindikators für die digitale Karte und ein Speichern der erstellten digitalen Karte und des ermittelten ersten Vertrauensindikators in einer Speichervorrichtung des Kraftfahrzeugs. Danach können diese gespeicherten Daten wiederum mit dem elektronischen Horizont verglichen werden.

Dabei werden der erste Vertrauensindikator und der zweite Vertrauensindikator herabgesetzt, falls die in dem elektronischen Horizont bereitgestellten Informationen mit der erstellten digitalen Karte im Bereich der zweiten Umgebung des Kraftfahrzeugs nicht übereinstimmen. Wenn jedoch die in dem elektronischen Horizont bereitgestellten Informationen mit der erstellten digitalen Karte im Bereich der zweiten Umgebung des Kraftfahrzeugs übereinstimmen, dann werden der erste Vertrauensindikator und der zweite Vertrauensindikator jeweils heraufgesetzt. Bei einer Änderung des zweiten Vertrauensindikators wird zur Berechnung des geänderten zweiten Vertrauensindikators der erste Vertrauensindikator verwendet.

Außerdem kann das Ermitteln von Daten der ersten Umgebung des Kraftfahrzeugs wiederholt durchgeführt werden, wobei die ermittelten Daten miteinander verglichen werden, und wobei der eine erste Vertrauensindikator in Abhängigkeit von dem Vergleich jeweils geändert und höher bewertet wird, falls sich die Daten ein n'tes mal bestätigen.

In einer Weiterentwicklung des sicherheitsrelevanten Verfahrens werden die nachfolgenden Schritte durchgeführt. Zunächst wird eine zweite momentane Position des Kraftfahrzeugs ermittelt. Dann werden die Informationen über eine dritte, im Bereich der ermittelten zweiten momentanen Position des Kraftfahrzeugs liegende Umgebung des Kraftfahrzeugs in dem elektronischen Horizont bereitgestellt. Es erfolgt das Ermitteln eines vierten Vertrauensindikators, wobei der vierte Vertrauensindikator mittels des zweiten Vertrauensindikators ermittelt wird, falls im Bereich der ermittelten zweiten momentanen Position des Kraftfahrzeugs keine Informationen der erstellten digitalen Karte vorliegen.

Danach kann ein Verwenden der in dem elektronischen Horizont bereitgestellten Informationen in dem zumindest einen Fahrerassistenzsystem des Kraftfahrzeugs in Abhängigkeit von dem vierten Vertrauensindikator eingesetzt werden. Bei diesem Verfahren wird davon ausgegangen, dass für die momentane zweite Position des Kraftfahrzeugs keine eigenen erstellten Karteninformationen vorliegen, so dass der elektronische Horizont allein das Fahrerassistenzsystem des Fahrzeugs unterstütz.

Andererseits ist es auch möglich, dass der zweite Vertrauensindikator für den elektronischen Horizont mehrfach ermittelt wird, wobei ein gewichteter Mittelwert aus den ermittelten Werten des zweiten Vertrauensindikators gebildet wird, um die Zuverlässigkeit des Systems zu erhöhen. Weiterhin ist es vorgesehen, eine dritte momentane Position des Kraftfahrzeugs zu ermitteln, um damit einen fünften Vertrauensindikator zu verbinden, wobei der fünfte Vertrauensindikator mittels des ersten Vertrauensindikators und dem gewichteten Mittelwert der Daten des elektronischen Horizonts ermittelt wird, falls im Bereich der dritten Umgebung des Kraftfahrzeugs keine weiteren Informationen des elektronischen Horizonts vorliegen. Ist das der Fall, so wird das Verwenden der erstellten digitalen Karte in dem zumindest einen Fahrerassistenzsystem des Kraftfahrzeugs in Abhängigkeit von dem zumindest fünften Vertrauensindikator eingesetzt.

Für das Erstellen einer eigenen Karte weist das Kraftfahrzeug eine Ermittlungsvorrichtung auf, die mindestens ein Element ausgewählt aus der Gruppe, bestehend aus Radarsensor, Lidarsensor, optischer Sensor, akustischer Sensor oder einem Positionssensor, vorsieht. Außerdem weist das Kraftfahrzeug vorzugsweise eine Fahrzeug-zu-Fahrzeug- oder Fahrzeug-zu-Umgebungsstruktur-Kommunikationsvorrichtung auf, wobei die zumindest eine Ermittlungsvorrichtung des Kraftfahrzeugs Daten der zumindest einen ersten Umgebung des Kraftfahrzeugs mittels empfangener Daten von der Fahrzeug-zu-Fahrzeug oder Fahrzeug-zu-Umgebungsstruktur-Kommunikationsvorrichtung erfasst. Die Fahrzeug-zu-Fahrzeug- oder Fahrzeug-zu-Umgebungsstruktur-Kommunikationsvorrichtung trägt dazu bei, die erstellte digitale Karte weiter zu bewerten und zu verfeinern.

Vorzugsweise weist das Kraftfahrzeug einen Sensor und eine Datenfusionsvorrichtung auf, wobei topographische Daten der zweiten Umgebung des Kraftfahrzeugs mittels des einen Sensors ermittelt werden, und wobei die erstellte digitale Karte und die topographischen Daten der zweiten Umgebung des Kraftfahrzeugs mittels der Datenfusionsvorrichtung miteinander fusioniert werden. Eine derartige Datenfusionsvorrichtung hat den Vorteil, dass nur fusionierte Daten in der Speichereinheit des Kraftfahrzeugs gespeichert werden, was die Datenflut weiter einschränkt und die Daten bewertet und ihre Zuverlässigkeit erhöht.

Um dieses Verfahren durchzuführen, weist das Kraftfahrzeug eine erste Ermittlungsvorrichtung zum Ermitteln von Daten einer ersten Umgebung des Kraftfahrzeugs auf. Ferner weist es eine Erstellungsvorrichtung zum Erstellen einer digitalen Karte aus den ermittelten Daten der einen ersten Umgebung des Kraftfahrzeugs auf. Darüber hinaus weist das Kraftfahrzeug eine zweite Ermittlungsvorrichtung zum Ermitteln eines ersten Vertrauensindikators für die digitale Karte auf und eine Speichervörrichtung, um ein Speichern der erstellten digitalen Karte und des Ermittelns des ersten Vertrauensindikators zu ermöglichen.

Eine Recheneinheit wird vorgesehen, um einen elektronischen Horizont für das Kraftfahrzeug bereitzustellen. Dazu weist das Kraftfahrzeug eine dritte Ermittlungsvorrichtung zum Ermitteln eines zweiten Vertrauensindikators für den elektronischen Horizont auf. Mit einer vierten Ermittlungsvorrichtung wird eine erste momentane Position des Kraftfahrzeugs ermittelt. Mit einer fünften Ermittlungsvorrichtung werden Informationen über eine zweite, im Bereich der ermittelten ersten momentanen Position des Kraftfahrzeugs liegende Umgebung.des Kraftfahrzeugs in dem elektronischen Horizont bereitgestellt.

Das Kraftfahrzeug weist darüber hinaus eine Vergleichsvorrichtung auf, um die in dem elektronischen Horizont bereitgestellten Informationen mit der erstellten digitalen Karte im Bereich der zweiten Umgebung des Kraftfahrzeugs zu vergleichen. Eine Änderungsvorrichtung ist zum Ändern des ersten Vertrauensindikators und des zweiten Vertrauensindikators in Abhängigkeit von dem Vergleich der bereitgestellten Informationen mit der erstellten digitalen Karte vorgesehen. Eine sechste Ermittlungsvorrichtung ist ausgebildet, um einen dritten Vertrauensindikator aus dem ersten Vertrauensindikator und dem zweiten Vertrauensindikator zu ermitteln. Schließlich steht ein Fahrerassistenzsystem im Kraftfahrzeug bereit, um die erstellte digitale Karte und/oder die in dem elektronischen Horizont bereitgestellten Informationen in Abhängigkeit von dem dritten Vertrauensindikator anzuwenden.

Um diese Bewertungen durchzuführen und nur gesicherte Daten für das Fahrzeugassistenzsystem bereitzustellen, verfügt das Steuergerät des Fahrzeugs über ein Computerprogramm, das auf einem Prozessor einer Rechenvorrichtung eines Kraftfahrzeugs ausgeführt wird. Dabei leitet das Computerprogramm die Rechenvorrichtung zur Durchführung nachfolgender Verfahrensschritte an. Zunächst werden Daten einer ersten Umgebung des Kraftfahrzeugs mittels einer ersten Ermittlungsvorrichtung des Kraftfahrzeugs ermittelt. Danach wird eine digitale Karte aus den ermittelten Daten der einen ersten Umgebung des Kraftfahrzeugs mittels einer Erstellungsvorrichtung erstellt.

Als nächstes wird ein erster Vertrauensindikator für die digitale Karte durch eine zweite Ermittlungsvorrichtung ermittelt. Ferner sieht das Computerprogramm vor, dass die erstellte digitale Karte und der ermittelte erste Vertrauensindikator in einer Speichervorrichtung gespeichert wird. Parallel erfolgt das Bereitstellen eines elektronischen Horizonts für das Kraftfahrzeug in einer Recheneinheit des Kraftfahrzeugs. Dabei wird ein zweiter Vertrauensindikator für den elektronischen Horizont mittels einer dritten Ermittlungsvorrichtung erstellt. Des Weiteren sieht das Computerprogramm vor, dass eine erste momentane Position des Kraftfahrzeugs mittels einer vierten Ermittlungsvorrichtung erfasst wird.

Danach werden Informationen über eine zweite, im Bereich der ermittelten ersten momentanen Position des Kraftfahrzeugs liegende Umgebung des Kraftfahrzeugs in dem elektronischen Horizont mittels einer fünften Ermittlungsvorrichtung bereitgestellt. Dann sieht das Computerprogramm vor, dass die in dem elektronischen Horizont bereitgestellten Informationen mit der erstellten digitalen Karte im Bereich der zweiten Umgebung des Kraftfahrzeugs mittels einer Vergleichsvorrichtung verglichen werden.

Daraufhin erfolgt ein Ändern des ersten Vertrauensindikators und des zweiten Vertrauensindikators in Abhängigkeit von dem Vergleich der bereitgestellten Informationen mit der erstellten digitalen Karte mit Hilfe einer Änderungsvorrichtung. Schließlich erfolgt das Ermitteln eines dritten Vertrauensindikators mittels des ersten Vertrauensindikators und des zweiten Vertrauensindikators über eine sechste Ermittlungsvorrichtung, und dann werden die erstellte digitale Karte und/oder die in dem elektronischen Horizont bereitgestellten Informationen in einem Fahrerassistenzsystem des Kraftfahrzeugs in Abhängigkeit von dem dritten Vertrauensindikator verwendet.

Mit diesem Computerprogramm wird sichergestellt, dass nach drei Bewertungsstufen, angepasst an das Ergebnis der Bewertungen in das Schaltsystem des Fahrzeugs oder in das Energiemanagementsystem des Fahrzeugs, über das Fahrerassistenzsystem eingegriffen wird. Dazu ist es erforderlich, dass ein computerlesbares Medium in dem Fahrzeug bereitgestellt wird, auf dem ein derartiges Computerprogramm gespeichert ist.

Mit diesem System wird das Problem der mangelnden Aktualität der Kartendaten überwunden, indem die momentanen Positionen des Kraftfahrzeugs durch selbst gelernte Kartensysteme ermittelt werden und mit Hilfe des elektronischen Horizonts zusätzlich abgeglichen werden. Damit wird die für die Sicherheitsanwendung notwendige Redundanz der Informationen geschaffen und die Karteninformationen, sei es von dem elektronischen Horizont oder von der eigen erstellten Umgebung, bewertet, bevor damit ein Fahrerassistenzsystem versorgt wird.

Zur weiteren Erläuterung der Durchführungsformen der erfindungsgemäßen Verfahren und Vorrichtungen werden nun Beispiele beschrieben.

### Beispiele zur Durchführung der oben aufgeführten Verfahren:

Beispielsweise wird aus Fahrzeugdaten eine Karte der bereits vom Fahrzeug gefahrenen Strecken erstellt. Diese Daten werden in einer eigenen digitalen Karte gespeichert. Beim Befahren einer Strecke werden nun die selbst gelernten Informationen aus der eigenen digitalen Karte mit denen aus einem elektronischen Horizont verglichen. Sind beide Informationen gleich, so wird den Karteninformationen ein großer Vertrauensindikator gegeben. Diese Information wird zusätzlich noch in einen Gesamtindikator für den elektronischen Horizont eingerechnet, wie beispielsweise ein gewichteter Mittelwert des Vertrauensindikators über die bisher geprüfte Strecke oder gewichtete Mittelwerte des Vertrauensindikators über die letzten Prüfungen, wobei kürzer zurückliegende Prüfungen höher bewertet werden als länger zurückliegende Prüfungen.

Gibt es jedoch an einer Stelle noch keine selbst gelernte Karte, so wird der Gesamtindikator des elektronischen Horizontes zur Ermittlung des Vertrauensindikators verwendet. Der so ermittelte Vertrauensindikator kann jedoch nicht so hoch sein wie der Vertrauensindikator bei vorhandener selbst gelernter Karte des Fahrzeugs.

Gibt es jedoch an einer Stelle keine Daten aus dem elektronischen Horizont, weil z. B. kein elektronischer Horizont verfügbar ist, so wird der Vertrauensindikator aus der Zeit seit dem letzten Befahren der Strecke und der Korrelation der bisherigen Messungen ermittelt.

Widersprechen sich elektronischer Horizont und selbst gelernte Karte, so wird der selbst gelernten Karte mehr vertraut, jedoch wird aus Sicherheitsgründen ein niedrigerer dritter Vertrauensindikator weitergegeben. Zusätzlich wird der Gesamtvertrauensindikator des elektronischen Horizonts mit Hilfe der oben bereits erörterten Verfahrensschritte abgewertet.

Die selbst gelernte Karte hat einen eigenen ersten Vertrauensindikator. Dieser wird ermittelt, indem gespeichert wird, wie oft die Strecke bereits befahren wurde, und wie oft dabei die gelernte Information bestätigt wurde. Wird eine Änderung erkannt, so wird der erste Vertrauensindikator auf den Startwert zurückgesetzt, jedoch die alte Strecke weiterhin gespeichert. Wird nach einiger Zeit wieder eine Änderung erkannt, so wird geprüft, ob wieder die alte Strecke gilt. Falls ja, wird mit dem zuletzt gültigen ersten Vertrauensindikator der alten Strecke gestartet. Falls nein, wird die alte Strecke endgültig verworfen.

Nach einem Vergleich werden die Daten idealerweise einer Sensorfusion zugeführt. Dort können die Kartendaten benutzt werden, um Umfeldsensordaten einer Kamera, eines Radars und/oder eines Lidars zu stützen. Mit der Sensorfusion kann zusätzlich noch überprüft werden, ob die Kartendaten stimmen, indem z. B. eine Kamera erkennen kann, wie der Spurverlauf ist und ob dieser der Karte entspricht. Außerdem kann z. B. eine Kamera noch zusätzliche Daten liefern, wie z. B. erkannte Verkehrsschilder. Die Sensorfusion liefert gegebenenfalls eine Korrektur oder Ergänzung an die gelernte Karte zurück und kann auch gegebenenfalls das Vertrauen in den elektronischen Horizont abwerten.

Einige Streckenabschnitte können nur temporär in der Streckenführung geändert sein, z. B. bei Baustellen. Im Fall von Autobahnbaustellen könnten diese anhand von typischen Fahrmustern detektiert werden, oder es können auch Sensorfusionsdaten verwendet werden. Zusätzlich können solche Änderungen im Straßenverkehr vom Fahrer bestätigt werden und gegebenenfalls sogar von diesem ein Gültigkeitszeitraum der Änderung angegeben werden. Nach diesem Gültigkeitszeitraum gilt dann wieder der alte Straßenverlauf und damit die alte Karte.

Ebenfalls kann von der Elektronik gelernt werden, wie die Durchschnittsgeschwindigkeit in einem Bereich zu einer gewissen Tageszeit eines Fahrers ist, und darauf aufbauend können Systemsschwellen angepasst werden. Straßentyp, Straßenklasse, erlaubte Fahrtrichtung usw. können vor allem mit Hilfe von Umfeldsensordaten, Geschwindigkeiten und den Daten aus der Fahrzeug-zu-Fahrzeug- oder Fahrzeug-zu-Umgebungsstruktur-Kommunikation ermittelt werden. Damit können entweder neue Fahrerassistenzsysteme angeboten werden, beispielsweise für einen Kurvenwarner, oder alte verbessert werden, wie z. B. das ACC-Verfahren.

Zusammenfassend lassen sich folgende Vorteile der Erfindung feststellen. Die Erfindung nutzt Umfeldsensoren, die Daten für eine Kartenerstellung liefern, jedoch bisher nicht gespeichert werden und damit verlorengehen. So werden in vorteilhafter Weise für die Erstellung von eigenen Karten folgende Umfeldsensoren eingesetzt und deren Daten gespeichert:
1. Aus GPS-Positionen werden die eigene Fahrspur und damit eine Grundlage für die Straßenbestimmung ermittelt.
2. Aus Fahrdynamiksensoren kann ebenfalls die eigene Fahrspur ermittelt werden, jedoch nur relativ zu einem jeweiligen Startpunkt. Idealerweise wird diese Information daher mit den GPS-Positionen verknüpft.
3. Bei dem Abstandsradar (ACC) wird bereits heute von dem Abstandsradar eine Spurschätzung erstellt, die ebenfalls als Grundlage für die Erkennung einer Fahrspur verwendet werden kann.
4. Mittels Kamerasensorik können Fahrspuren und Verkehrszeichen erkannt und gespeichert werden.
5. Mittels Fahrzeug-zu-Fahrzeug-Kommunikation oder Fahrzeug-zu-Umgebungsstruktur-Kommunikation können die Positionen anderer Fahrzeuge und damit selbst nicht befahrene Straßen und Fahrspuren erkannt werden.

Diese bereits zur Verfügung stehenden und zu speichernden Daten können typischerweise noch durch die Fahrzeugsensorik, wie Raddrehzahlen, Gierrate, Lenkradwinkel usw. sowie darauf aufbauende Fahrzeugmodelle gestützt werden. Weiterhin ist es möglich, diese Umfelddaten noch zu fusionieren, da jeder Sensor Eigenheiten, Stärken und Schwächen aufweist, die bei einer Fusion berücksichtigt werden können und damit das Gesamtergebnis zuverlässiger und verbessert wird. Eine aus diesen Daten vom Steuergerät des Kfz selbst erstellten Karte kann weiter verfeinert werden, wenn eine Strecke wiederholt befahren wird. Dadurch ist es auch möglich, sich relativ schnell an Änderungen der Strecken anzupassen.

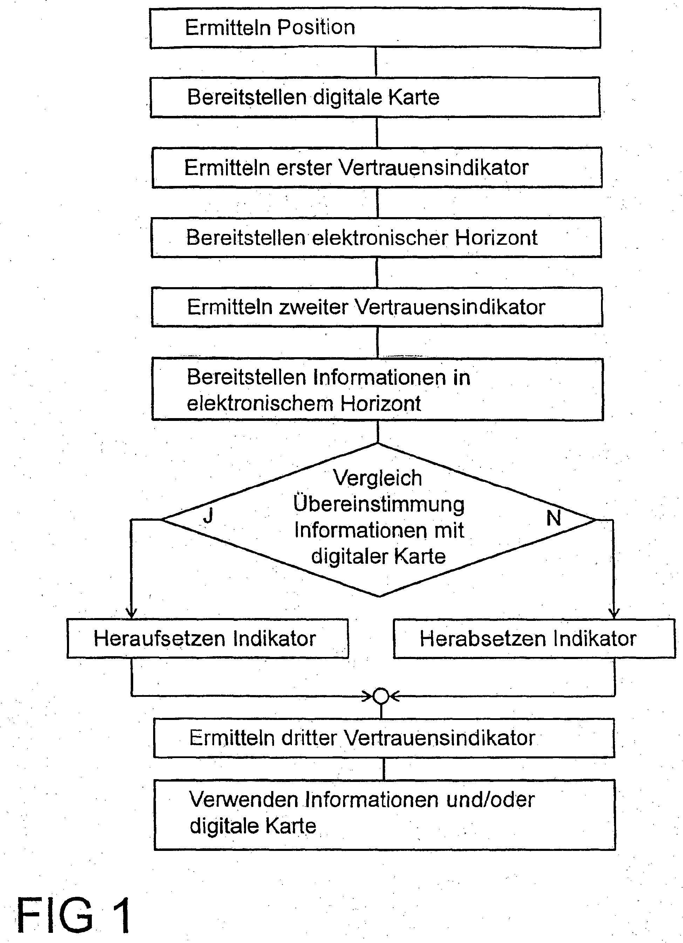

Figur 1 zeigt dazu ein Flussdiagramm eines bevorzugten Verfahrens zur Bewertung bzw. Validierung von einer selbst erstellten digitaler Karte und einem bereitgestelltem elektronischen Horizont. Dabei wird zunächst, wie Figur 1 zeigt, die Position des Fahrzeugs ermittelt und anschließend eine digitale Karte bereitgestellt und ein erster Vertrauensindikator ermittelt. Mit dem Bereitstellen eines elektronischen Horizonts wird ein zweiter Vertrauensindikator ermittelt. Schließlich erfolgt das Bereitstellen von Informationen in dem elektronischen Horizont. Besteht eine Übereinstimmung zwischen den Informationen des digitalen Horizonts mit der selbst bereitgestellten digitalen Karte, wird der zweite Vertrauensindikator heraufgesetzt. Besteht diese Übereinstimmung nicht, so wird der zweite Vertrauensindikator herabgesetzt. Bei heraufgesetzten Indikator wird ein dritter Vertrauensindikator definiert und ein Verwenden von Informationen der digital erstellten Karte für ein Fahrerassistenzsystem frei gegeben.

Als nächstes werden drei Durchführungsbeispiele für die Anwendung der oben aufgeführten Verfahren beschrieben.

### Erstes Beispiel:

Ein Fahrzeug befährt zum ersten Mal eine neue Strecke. Der elektronische Horizont hat aufgrund der bisherigen Fahrten einen gewissen Grundvertrauenslevel erreicht. Daher verwendet das ACC-Radar trotzdem die Daten des elektronischen Horizonts. Auf der Autobahn ist für das ACC eine Geschwindigkeit von 150 km/h gesetzt und eingestellt, jedoch kann durch den Verkehr nur 100 km/h gefahren werden, was das ACC entsprechend auch einregelt. Vor einer Autobahnausfahrt schert der Fahrer nach rechts auf die Ausfahrtfahrspur aus und hat dadurch kein Fahrzeug mehr vor sich. Da der elektronische Horizont jedoch zeigt, dass es sich um einen Fahrspurwechsel auf eine Ausfahrspur der Autobahn handelt, beschleunigt das ACC trotz der gesetzten Geschwindigkeit von 150 km/h nicht und reduziert statt dessen die Geschwindigkeit auf 80 km/h, weil das die passende Geschwindigkeit für die kommende Ausfahrtkurve der Autobahnaüsfahrt ist.

### Zweites Beispiel:

Ein Fahrer fährt jeden Tag die gleiche Pendelstrecke und hat damit eine sehr gut gelernte Karte dieser Strecke. Bisher haben elektronischer Horizont und selbst gelernte Karte immer übereingestimmt, und daher konnten sämtliche Fahrerassistenzsysteme (ADAS) die Kartendaten voll verwenden.

Bei einer Fahrt ist eine neue Baustelle auf der Strecke. Dies wird beim Lernen der selbst erstellten Karte ermittelt, und damit ergibt sich eine Diskrepanz zwischen selbst erstellter gelernter Karte und elektronischem Horizont, weshalb die Kartendaten für das Fahrerassistenzsystem (ADAS) nicht mehr verwendet werden. Zusätzlich erkennt der Lernalgorithmus, dass es sich um eine typische Autobahnbaustelle handelt, weil ein Spurwechsel auf die Gegenspur erfolgt, und merkt sich daher weiterhin den alten Verlauf für die Zeit nach abgebauter Baustelle. Am nächsten Tag ist die Baustelle weiterhin vorhanden, und es gibt daher erneut eine Diskrepanz zwischen elektronischem Horizont und selbst gelernter Karte. Da jedoch diesmal die selbst gelernte Karte bereits vorhanden ist und einen geringen Vertrauenslevel aufweist, können die ADAS-Funktionen die Kartendaten aus der selbst gelernten Karte zu einem gewissen Teil bereits verwenden. Der volle Umfang der Kartenverwendung steht jedoch nicht zur Verfügung, und Sicherheitsanweisungen können diese Kartendaten nicht verwenden.

### Drittes Beispiel:

Bei einem ITS (Intelligent Transport Systems) dient ein Systemelement der Vorverarbeitung von Fahrzeug-zu-Fahrzeug- und Fahrzeug-zu-Umgebungsstruktur-Daten (C2X-Komunikationsdaten). Dabei finden in dem Systemelement auch GPS-Daten und Fahrdynamikdaten Verwendung. Es bietet sich somit an, das Systemelement für die Vorverarbeitung baulich mit dem beschriebenen Modul zur Kartenbewertung zu kombinieren. So können für das Lernen der Karte leicht auch C2X-Daten (Fahrzeug-zu-Fahrzeug- bzw. Fahrzeug-zu-Umgebungsstruktur-Daten) verwendet werden und/oder die gelernte Karte für die Validierung der C2X-Daten eingesetzt werden.

In einer anderen Variante kann das Systemelement zur Vorverarbeitung bei ITS als Lieferant der gelernten Karten verwendet werden, wobei der Vergleich in einem anderen Steuergerät z. B. dort, wo die Daten verwendet werden sollen, erfolgen kann.

## Patentansprüche

1. Verfahren zur Erstellung und Weiterverwendung einer digitalen Karte für ein Kraftfahrzeug, wobei das Verfahren folgende Schritte aufweist:
- Bereitstellen einer digitalen Karte und zumindest eines ersten Vertrauensindikators für die digitale Karte mittels zumindest einer Vorrichtung des Kraftfahrzeugs,
- Bereitstellen eines elektronischen Horizonts für das Kraftfahrzeug in zumindest einer Recheneinheit des Kraftfahrzeugs,
- Ermitteln einer ersten momentanen Position des Kraftfahrzeugs in einer ersten Umgebung des Kraftfahrzeugs,
- Bereitstellen von Informationen über eine zweite, im Bereich der ermittelten ersten momentanen Position des Kraftfahrzeugs liegende Umgebung des Kraftfahrzeugs und Speichen der Informationen in dem elektronischen Horizont,
- Ermitteln zumindest eines zweiten Vertrauensindikators für den elektronischen Horizont,
**dadurch gekennzeichnet, dass** die nachfolgenden Schritte
- Vergleichen der in dem elektronischen .Horizont bereitsgestellten Informationen mit der erstellten digitalen Karte im Bereich der zweiten Umgebung des Kraftfahrzeugs,
- Ändern des zumindest einen ersten Vertrauensindikators und des zumindest einen zweiten Vertrauensindikators in Abhängigkeit von dem Vergleich der bereitgestellten Informationen mit der erstellten digitalen Karte,
- Ermitteln zumindest eines dritten Vertrauensindikators aus dem zumindest einen ersten Vertrauensindikator und dem zumindest einen zweiten Vertrauensindikator,
- Verwenden der erstellten digitalen Karte und/oder der in dem elektronischen Horizont bereitgestellten Informationen in zumindest einem Fahrerassistenzsystem des Kraftfahrzeugs in Abhängigkeit von dem zumindest einen dritten Vertrauensindikator
durchlaufen werden.

2. Verfahren nach Anspruch 1, wobei das Bereitstellen der digitalen Karte und des zumindest einen ersten Vertrauensindikators für die digitale Karte folgende Schritte aufweist:
- Ermitteln von Daten zumindest einer ersten Umgebung des Kraftfahrzeugs mittels zumindest einer Ermittlungsvorrichtung des Kraftfahrzeugs,
- Erstellen der digitalen Karte aus den ermittelten Daten der zumindest einen ersten Umgebung des Kraftfahrzeugs,
- Ermitteln zumindest eines ersten Vertrauensindikators für die digitale Karte,
- Speichern der erstellten digitalen Karte und des ermittelten zumindest einen ersten Vertrauensindikators in einer Speichervorrichtung des Kraftfahrzeugs.

3. Verfahren nach Anspruch 1 oder Anspruch 2, wobei der zumindest eine erste Vertrauensindikator und der zumindest eine zweite Vertrauensindikator herabgesetzt werden, falls die in dem elektronischen Horizont bereitgestellten Informationen mit der erstellten digitalen Karte im Bereich der zweiten Umgebung des Kraftfahrzeugs nicht übereinstimmen, und wobei der zumindest eine erste Vertrauensindikator und der zumindest eine zweite Vertrauensindikator heraufgesetzt werden, falls die in dem elektronischen Horizont bereitgestellten Informationen mit der erstellten digitalen Karte im Bereich der zweiten Umgebung des Kraftfahrzeugs übereinstimmen.

4. Verfahren nach einem der vorhergehenden Ansprüche, wobei der zumindest eine erste Vertrauensindikator bei einer Änderung des zumindest einen zweiten Vertrauensindikators zur Berechnung des geänderten zweiten Vertrauensindikators verwendet wird.

5. Verfahren nach einem der vorhergehenden Ansprüche, wobei das Ermitteln von Daten der zumindest einen ersten Umgebung des Kraftfahrzeugs wiederholt durchgeführt wird, und wobei die ermittelten Daten miteinander verglichen werden, und wobei der zumindest eine erste Vertrauensindikator in Abhängigkeit von dem Vergleich geändert wird.

6. Verfahren nach einem der vorhergehenden Ansprüche, wobei das Verfahren weiterhin folgende Schritte aufweist:
- Ermitteln einer zweiten momentanen Position des Kraftfahrzeugs,
- Bereitstellen von Informationen über eine dritte, im Bereich der ermittelten zweiten momentanen Position des Kraftfahrzeugs liegende Umgebung des Kraftfahrzeugs in dem elektronischen Horizont,
- Ermitteln zumindest eines vierten Vertrauensindikators, wobei der zumindest eine vierte Vertrauensindikator mittels des zumindest einen zweiten Vertrauensindikators ermittelt wird, falls im Bereich der ermittelten zweiten momentanen Position des Kraftfahrzeugs keine Informationen der erstellten digitalen Karte vorliegen,
- Verwenden der in dem elektronischen Horizont bereitgestellten Informationen in dem zumindest einen Fahrerassistenzsystem des Kraftfahrzeugs in Abhängigkeit von dem zumindest einen vierten Vertrauensindikator.

7. Verfahren nach einem der vorhergehenden Ansprüche, wobei der zumindest eine zweiten Vertrauensindikators für den elektronischen Horizont mehrfach ermittelt wird, und wobei ein gewichteter Mittelwert aus den ermittelten Werten des zweiten Vertrauensindikators gebildet wird.

8. Verfahren nach Anspruch 7, wobei das Verfahren weiterhin folgende Schritte aufweist:
- Ermitteln einer dritten momentanen Position des Kraftfahrzeugs, ,
- Ermitteln zumindest eines fünften Vertrauensindikators, wobei der zumindest eine fünfte Vertrauensindikator mittels des zumindest einen ersten Vertrauensindikators und dem gewichteten Mittelwert ermittelt wird, falls im Bereich der dritten Umgebung des Kraftfahrzeugs keine Informationen des elektronischen Horizonts vorliegen,
- Verwenden der erstellten digitalen Karte.in dem zumindest einen Fahrerassistenzsystem des Kraftfahrzeugs in Abhängigkeit von dem zumindest einen fünften Vertrauensindikator.

9. Verfahren nach einem der vorhergehenden Ansprüche, wobei die zumindest eine Ermittlungsvorrichtung des Kraftfahrzeugs mindestens ein Element, ausgewählt aus der Gruppe, bestehend aus einem Radarsensor, einem Lidarsensor, einem optischen Sensor, einem akustischen Sensor und einem Positionssensor, beinhaltet.

10. Verfahren nach einem der vorhergehenden Ansprüche, wobei das Kraftfahrzeug eine Fahrzeug-zu-Fahrzeug-Kommunikationsvorrichtung aufweist, und wobei die zumindest eine Ermittlungsvorrichtung des Kraftfahrzeugs Daten der zumindest einen ersten Umgebung des Kraftfahrzeugs mittels von der Fahrzeug-zu-Fahrzeug-Kommunikationsvorrichtung empfangener Daten ermittelt.

11. Verfahren nach einem der Ansprüche 1 bis 9, wobei das Kraftfahrzeug eine Fahrzeug-zu-Fahrzeug-Kommunikationsvorrichtung aufweist, und wobei von der Fahrzeug-zu-Fahrzeug-Kommunikationsvorrichtung empfangene Daten mittels der erstellten digitalen Karte validiert werden.

12. Verfahren nach einem der vorhergehenden Ansprüche, wobei das Kraftfahrzeug zumindest einen Sensor und eine Datenfusionsvorrichtung aufweist, und wobei topographische Daten der zweiten Umgebung des Kraftfahrzeugs mittels des zumindest einen Sensors ermittelt werden, und wobei die erstellte digitale Karte und die topographischen Daten der zweiten Umgebung des Kraftfahrzeugs mittels der Datenfusionsvorrichtung miteinander fusioniert werden.

13. Kraftfahrzeug aufweisend:
- eine erste Ermittlungsvorrichtung, ausgebildet zum Ermitteln von Daten zumindest einer ersten Umgebung des Kraftfahrzeugs,
- eine Erstellungsvorrichtung, ausgebildet zum Erstellen einer digitalen Karte aus den ermittelten Daten der zumindest einen ersten Umgebung des Kraftfahrzeugs,
- eine zweite Ermittlungsvorrichtung, ausgebildet zum Ermitteln zumindest eines ersten Vertrauensindikators für die digitale Karte,
- eine Speichervorrichtung, ausgebildet zum Speichern der erstellten digitalen Karte und des ermittelten zumindest einen ersten Vertrauensindikators,
- eine Recheneinheit, ausgebildet zum Bereitstellen eines elektronischen Horizonts für das Kraftfahrzeug,
- eine dritte Ermittlungsvorrichtung, ausgebildet zum Ermitteln zumindest eines zweiten Vertrauensindikators für den elektronischen Horizont,
- eine vierte Ermittlungsvorrichtung, ausgebildet zum Ermitteln einer ersten momentanen Position in einer ersten Umgebung des Kraftfahrzeugs
- eine fünfte Ermittlungsvorrichtung, ausgebildet zum Bereitstellen von Informationen über eine zweite im Bereich der ermittelten ersten momentanen Position des Kraftfahrzeugs liegende Umgebung des Kraftfahrzeugs in dem elektronischen Horizont,
- eine sechste Ermittlungsvorrichtung, ausgebildet zum Ermitteln zumindest eines dritten Vertrauensindikators mittels des zumindest einen ersten Vertrauensindikators und des zumindest einen zweiten Vertrauensindikators,
- ein Fahrerassistenzsystem, ausgebildet zum Verwenden der erstellten digitalen Karte und/oder der in dem elektronischen Horizont bereitgestellten Informationen in Abhängigkeit von dem zumindest einen dritten Vertrauensindikator.
**gekennzeichnet durch**
- eine Vergleichsvorrichtung, ausgebildet zum Vergleichen der in dem elektronischen Horizont bereitgestellten Informationen mit der erstellten digitalen Karte im Bereich der zweiten Umgebung des Kraftfahrzeugs,
- eine Änderungsvorrichtung, ausgebildet zum Ändern des zumindest einen ersten Vertrauensindikators und des zumindest einen zweiten Vertrauensindikators in Abhängigkeit von dem Vergleich der bereitgestellten Informationen mit der erstellten digitalen Karte,

14. Computerprogramm, das, wenn es auf einem Prozessor einer Rechenvorrichtung eines Kraftfahrzeugs ausgeführt wird, die Rechenvorrichtung anleitet, folgende Schritte auszuführen:
- Ermitteln von Daten zumindest einer ersten Umgebung des Kraftfahrzeugs mittels zumindest einer ersten Ermittlungsvorrichtung des Kraftfahrzeugs,
- Erstellen einer digitalen Karte aus den ermittelten
- Daten der zumindest einen ersten Umgebung des Kraftfahrzeugs mittels einer Erstellungsvorrichtung,
- Ermitteln zumindest eines ersten Vertrauensindikators für die digitale Karte mittels einer zweiten Ermittlungsvorrichtung,
- Speichern der erstellten digitalen Karte und des ermittelten zumindest einen ersten Vertrauensindikators mittels einer Speichervorrichtung,
- Bereitstellen eines elektronischen Horizonts für das Kraftfahrzeug in zumindest einer Recheneinheit des Kraftfahrzeugs,
- Ermitteln zumindest eines zweiten Vertrauensindikators für den elektronischen Horizont mittels einer dritten Ermittlungsvorrichtung,
- Ermitteln einer ersten momentanen Position des Kraftfahrzeugs mittels einer vierten Ermittlungsvorrichtung,
- Bereitstellen von Informationen über eine zweite im Bereich der ermittelten ersten momentanen Position des Kraftfahrzeugs liegende Umgebung des Kraftfahrzeugs in dem elektronischen Horizont mittels einer fünften Ermittlungsvorrichtung,
- Ermitteln zumindest eines dritten Vertrauensindikators mittels des zumindest einen ersten Vertrauensindikators und des zumindest einen zweiten Vertrauensindikators mittels einer sechsten Ermittlungsvorrichtung,
- Verwenden der erstellten digitalen Karte und/oder der in dem elektronischen Horizont bereitgestellten Informationen in zumindest einem Fahrerassistenzsystem des Kraftfahrzeugs in Abhängigkeit von dem zumindest einen dritten Vertrauensindikator,
**dadurch gekennzeichnet, dass** das Computer programm die Rechenvorrichtung ferner anleitet, die folgenden Schritte auszuführen:
- Vergleichen der in dem elektronischen Horizont bereitgestellten Informationen mit der erstellten digitalen Karte im Bereich der zweiten Umgebung des Kraftfahrzeugs mittels einer Vergleichsvorrichtung,
- Ändern des zumindest einen ersten Vertrauensindikators und des zumindest einen zweiten Vertrauensindikators in Abhängigkeit von dem Vergleich der bereitgestellten Informationen mit der erstellten digitalen Karte mittels einer Änderungsvorrichtung.

15. Computerlesbares Medium, auf dem ein Computerprogramm gemäß Anspruch 14 gespeichert ist.

## Claims

1. Method for generating and further using a digital map for a motor vehicle, the method having the following steps:
- providing a digital map and at least one first confidence indicator for the digital map by means of at least one device of the motor vehicle,
- providing an electronic horizon for the motor vehicle in at least one arithmetic unit of the motor vehicle,
- determining a first instantaneous position of the motor vehicle in a first environment of the motor vehicle,
- providing information about a second environment of the motor vehicle, lying within the area of the determined first instantaneous position of the motor vehicle and storing the information in the electronic horizon,
- determining at least one second confidence indicator for the electronic horizon,
**characterized in that** the following steps are run through:
- comparing the information provided in the electronic horizon with the generated digital map in the area of the second environment of the motor vehicle,
- changing the at least one first confidence indicator and the at least one second confidence indicator in dependence on the comparison of the provided information with the generated digital map,
- determining at least one third confidence indicator from the at least one first confidence indicator and the at least one second confidence indicator,
- using the generated digital map and/or the information provided in the electronic horizon in at least one driver assistance system of the motor vehicle in dependence on the at least one third confidence indicator.

2. Method according to Claim 1, wherein the providing of the digital map and of the at least one first confidence indicator for the digital map has the following steps:
- determining of data of at least one first environment of the motor vehicle by means of at least one locating device of the motor vehicle,
- generating the digital map from the determined data of the at least one first environment of the motor vehicle,
- determining at least one first confidence indicator for the digital map,
- storing the generated digital map and the determined, at least one first confidence indicator in a memory device of the motor vehicle.

3. Method according to Claim 1 or Claim 2, wherein the at least one first confidence indicator and the at least one second confidence indicator are lowered if the information provided in the electronic horizon does not correspond to the generated digital map in the area of the second environment of the motor vehicle and wherein the at least one first confidence indicator and the at least one second confidence indicator are raised if the information provided in the electronic horizon corresponds to the generated digital map in the area of the second environment of the motor vehicle.

4. Method according to one of the preceding claims, wherein the at least one first confidence indicator, in the case of a change of the at least one second confidence indicator, is used for calculating the changed second confidence indicator.

5. Method according to one of the preceding claims, wherein the determining of data of the at least one first environment of the motor vehicle is carried out repeatedly and wherein the determined data are compared with one another and wherein the at least one first confidence indicator is changed in dependence on the comparison.

6. Method according to one of the preceding claims, wherein the method also has the following steps:
- determining a second instantaneous position of the motor vehicle,
- providing information about a third environment of the motor vehicle, lying within the area of the determined second instantaneous position of the motor vehicle, in the electronic horizon,
- determining at least one fourth confidence indicator, wherein the at least one fourth confidence indicator is determined by means of at least one second confidence indicator if no information of the generated digital map is available in the area of the determined second instantaneous position of the motor vehicle,
- using the information provided in the electronic horizon in the at least one driver assistance system of the motor vehicle in dependence on the at least one fourth confidence indicator.

7. Method according to one of the preceding claims, wherein the at least one second confidence indicator is determined several times for the electronic horizon and wherein a weighted mean value is formed from the determined values of the second confidence indicator.

8. Method according to Claim 7, wherein the method also has the following steps:
- determining a third instantaneous position of the motor vehicle,
- determining at least one fifth confidence indicator, wherein the at least one fifth confidence indicator is determined by means of the at least one first confidence indicator and the weighted mean value if there is no information of the electronic horizon present in the area of the third environment of the motor vehicle,
- using the generated digital map in the at least one driver assistance system of the motor vehicle in dependence on the at least one fifth confidence indicator.

9. Method according to one of the preceding claims, wherein the at least one locating device of the motor vehicle contains at least one element, selected from the group consisting of a radar sensor, a lidar sensor, an optical sensor, an acoustical sensor and a position sensor.

10. Method according to one of the preceding claims, wherein the motor vehicle has a vehicle-to-vehicle communication device and wherein the at least one locating device of the motor vehicle determines data of the at least one first environment of the motor vehicle by means of data received from the vehicle-to-vehicle communication device.

11. Method according to one of Claims 1 to 9, wherein the motor vehicle has a vehicle-to-vehicle communication device and wherein data received by the vehicle-to-vehicle communication device are validated by means of the generated digital map.

12. Method according to one of the preceding claims, wherein the motor vehicle has at least one sensor and one data fusion device and wherein topographic data of the second environment of the motor vehicle are determined by means of the at least one sensor and wherein the generated digital map and the topographic data of the second environment of the motor vehicle are fused together by means of the data fusion device.

13. Motor vehicle having:
- a first locating device constructed for determining data of at least one first environment of the motor vehicle,
- a generating device constructed for generating a digital map from the determined data of the at least one first environment of the motor vehicle,
- a second locating device constructed for determining at least one first confidence indicator for the digital map,
- a memory device constructed for storing the generated digital map and the determined at least one first confidence indicator,
- an arithmetic unit constructed for providing an electronic horizon for the motor vehicle,
- a third locating device constructed for determining at least one second confidence indicator for the electronic horizon,
- a fourth locating device constructed for determining a first instantaneous position in a first environment of the motor vehicle,
- a fifth locating device constructed for providing information about a second environment of the motor vehicle, lying within the area of the determined first instantaneous position of the motor vehicle, in the electronic horizon,
- a sixth locating device constructed for determining at least one third confidence indicator by means of the at least one first confidence indicator and of the at least one second confidence indicator,
- a driver assistance system constructed for using the generated digital map and/or the information provided in the electronic horizon in dependence on the at least one third confidence indicator, **characterized by**
- a comparing device constructed for comparing the information provided in the electronic horizon with the generated digital map in the area of the second environment of the motor vehicle,
- a changing device constructed for changing the at least one first confidence indicator and the at least one second confidence indicator in dependence on the comparison of the provided information with the generated digital map.

14. Computer program which, when it is executed on a processor of an arithmetic device of a motor vehicle, instructs the arithmetic device to carry out the following steps:
- determining data of at least one first environment of the motor vehicle by means of at least one first locating device of the motor vehicle,
- generating a digital map from the determined data of the at least one first environment of the motor vehicle by means of a generating device,
- determining at least one first confidence indicator for the digital map by means of a second locating device,
- storing the generated digital map and the determined at least one first confidence indicator by means of a memory device,
- providing an electronic horizon for the motor vehicle in at least one arithmetic unit of the motor vehicle,
- determining at least one second confidence indicator for the electronic horizon by means of a third locating device,
- determining a first instantaneous position of the motor vehicle by means of a fourth locating device,
- providing information about a second environment of the motor vehicle, lying within the area of the determined first instantaneous position of the motor vehicle, in the electronic horizon by means of a fifth locating device,
- determining at least one third confidence indicator by means of the at least one first confidence indicator and the at least one second confidence indicator by means of a sixth locating device,
- using the generated digital map and/or the information provided in the electronic horizon in at least one driver assistance system of the motor vehicle in dependence on the at least one third confidence indicator, **characterized in that** the computer program furthermore instructs the arithmetic device to carry out the following steps:
- comparing the information provided in the electronic horizon with the generated digital map in the area of the second environment of the motor vehicle by means of a comparing device,
- changing the at least one first confidence indicator and the at least one second confidence indicator in dependence on the comparison of the provided information with the generated digital map by means of a changing device.

15. Computer-readable medium on which a computer program according to Claim 14 is stored.

## Revendications

1. Procédé d'établissement et de réutilisation d'une carte numérique pour un véhicule automobile, le procédé ayant les stades suivants :
- mise à disposition d'une carte numérique et d'au moins un premier indicateur de confiance pour la carte numérique au moyen d'au moins un dispositif du véhicule automobile,
- mise à disposition d'un horizon électronique pour le véhicule automobile dans au moins une unité informatique du véhicule automobile,
- détermination d'une première position instantanée du véhicule automobile dans un premier environnement du véhicule automobile,
- mise à disposition d'informations sur un deuxième environnement du véhicule automobile se trouvant dans la zone de la première position instantanée du véhicule automobile qui a été déterminée et mémorisation des informations dans l'horizon électronique,
- détermination d'au moins un deuxième indicateur de confiance pour l'horizon électronique,
**caractérisé en ce que** l'on effectue les stades suivants
- comparaison des informations, mises à disposition dans l'horizon électronique, à la carte numérique établie dans la zone du deuxième environnement du véhicule automobile,
- modification du au moins un premier indicateur de confiance et du au moins un deuxième indicateur de confiance en fonction de la comparaison des informations, mises à disposition, à la carte numérique établie,
- détermination d'au moins un troisième indicateur de confiance à partir du au moins un premier indicateur de confiance et du au moins un deuxième indicateur de confiance,
- utilisation de la carte numérique établie et/ou des informations, mises à disposition dans l'horizon électronique, dans au moins un système d'assistance à la conduite du véhicule automobile, en fonction du au moins un troisième indicateur de confiance.

2. Procédé suivant la revendication 1, dans lequel la mise à disposition de la carte numérique due au moins à un premier indicateur de confiance pour la carte numérique a les stades suivants :
- détermination de données d'au moins un premier environnement du véhicule automobile au moyen d'au moins un dispositif de détermination du véhicule automobile,
- établissement de la carte numérique à partir des données déterminées du au moins un premier environnement du véhicule,
- détermination d'au moins un premier indicateur de confiance pour la carte numérique,
- mémorisation de la carte numérique établie et du au moins un premier indicateur de confiance, qui a été déterminé, dans un dispositif de mémorisation du véhicule automobile.

3. Procédé suivant la revendication 1 ou la revendication 2, dans lequel on néglige le au moins un premier indicateur de confiance et le au moins un deuxième indicateur de confiance si les informations, mises à disposition dans l'horizon électronique, ne coïncident pas avec la carte numérique établie dans la zone du deuxième environnement du véhicule automobile, et dans lequel on néglige le au moins un premier indicateur de confiance et le au moins un deuxième indicateur de confiance si les informations, mises à disposition dans l'horizon électronique, coïncident avec la carte numérique établie dans la zone du deuxième environnement du véhicule automobile.

4. Procédé suivant l'une des revendications précédentes, dans lequel on utilise le au moins un premier indicateur de confiance, lors d'une modification du au moins un deuxième indicateur de confiance, pour calculer le deuxième indicateur de confiance modifié.

5. Procédé suivant l'une des revendications précédentes, dans lequel on effectue la détermination de données du au moins un premier environnement du véhicule automobile de manière répétée et dans lequel on compare entre elles les données déterminées et dans lequel on modifie le au moins un premier indicateur de confiance en fonction de la comparaison.

6. Procédé suivant l'une des revendications précédentes, dans lequel le procédé a en outre les stades suivants :
- détermination d'une deuxième position instantanée du véhicule automobile,
- mise à disposition d'informations sur un troisième environnement du véhicule automobile dans l'horizon électronique se trouvant dans la zone de la deuxième position instantanée du véhicule automobile, qui a été déterminée,
- détermination d'au moins un quatrième indicateur de confiance, le au moins un quatrième indicateur de confiance étant déterminé au moyen du au moins un deuxième indicateur de confiance s'il n'y a pas d'informations de la carte numérique établie dans la zone de la deuxième position instantanée du véhicule automobile, qui a été déterminée,
- utilisation des informations mises à disposition dans l'horizon électronique dans le au moins un système d'assistance à la conduite du véhicule automobile, en fonction du au moins un quatrième indicateur de confiance.

7. Procédé suivant l'une des revendications précédentes, dans lequel on détermine plusieurs fois le au moins un deuxième indicateur de confiance pour l'horizon électronique et dans lequel on forme une moyenne pondérée à partir des valeurs du deuxième indicateur de confiance, qui ont été déterminées.

8. Procédé suivant la revendication 7, dans lequel le procédé a en outre les stades suivants :
- détermination d'une troisième position instantanée du véhicule automobile,
- détermination d'au moins un cinquième indicateur de confiance, le au moins un cinquième indicateur de confiance étant déterminé au moyen du au moins un premier indicateur de confiance et de la moyenne pondérée s'il n'y a pas d'information de l'horizon électronique dans la zone du troisième environnement du véhicule automobile,
- utilisation de la carte numérique établie dans le au moins un système d'assistance à la conduite du véhicule automobile en fonction du au moins un cinquième indicateur de confiance.

9. Procédé suivant l'une des revendications précédentes, dans lequel le au moins un dispositif de détermination du véhicule automobile comporte au moins un élément choisi dans le groupe constitué d'une sonde lidar, d'une sonde optique, d'une sonde acoustique et d'une sonde de position.

10. Procédé suivant l'une des revendications précédentes, dans lequel le véhicule automobile comporte un dispositif de communication de véhicule à véhicule et dans lequel le au moins un dispositif de détermination du véhicule automobile détermine des données du au moins un premier environnement du véhicule automobile au moyen de données reçues du dispositif de communication de véhicule à véhicule.

11. Procédé suivant l'une des revendications 1 à 9, dans lequel le véhicule automobile a un dispositif de communication de véhicule à véhicule et dans lequel des données reçues du dispositif de communication de véhicule à véhicule sont validées au moyen de la carte numérique établie.

12. Procédé suivant l'une des revendications précédentes, dans lequel le véhicule automobile a au moins une sonde et un dispositif de fusion de données et dans lequel on détermine des données topographiques du deuxième environnement du véhicule automobile au moyen de la au moins une sonde et dans lequel on fusionne entre elles la carte numérique établie et les données topographiques du deuxième environnement du véhicule automobile au moyen du dispositif de fusion de données.

13. Véhicule automobile comportant :
- un premier dispositif de détermination, constitué pour déterminer des données d'au moins un premier environnement du véhicule automobile,
- un dispositif d'établissement, constitué pour établir une carte numérique à partir des données déterminées du au moins un premier environnement du véhicule automobile,
- un deuxième dispositif de détermination, constitué pour déterminer au moins un premier indicateur de confiance pour la carte numérique,
- un dispositif de mémorisation, constitué pour mémoriser la carte numérique, qui a été établie, et le au moins un premier indicateur de confiance, qui a été déterminé,
- une unité informatique constituée pour mettre à disposition un horizon électronique pour le véhicule automobile,
- un troisième dispositif de détermination, constitué pour déterminer au moins un deuxième indicateur de confiance pour l'horizon électronique,
- un quatrième dispositif de détermination constitué pour déterminer une première position instantanée dans un premier environnement du véhicule automobile,
- un cinquième dispositif de détermination, constitué pour mettre à disposition des informations sur un deuxième environnement du véhicule automobile dans l'horizon électronique, se trouvant dans la zone de la première position instantanée du véhicule automobile, qui a été déterminée,
- un sixième dispositif de détermination, constitué pour déterminer au moins un troisième indicateur de confiance au moyen du au moins un premier indicateur de confiance et du au moins un deuxième indicateur de confiance,
- un système d'assistance à la conduite constitué pour utiliser la carte numérique qui a été établie et/ou les informations mises à disposition dans l'horizon électronique, en fonction du au moins un troisième indicateur de confiance,
**caractérisé par**
- un dispositif de comparaison constitué pour comparer les informations, mises à disposition dans l'horizon électronique, à la carte numérique, qui a été établie, dans la région du deuxième environnement du véhicule automobile,
- un dispositif de modification, constitué pour modifier le au moins un premier indicateur de confiance et le au moins un deuxième indicateur de confiance en fonction de la comparaison des informations, qui ont été mises à disposition, à la carte numérique, qui a été établie.

14. Programme d'ordinateur qui, lorsqu'il se déroule sur un processeur d'un dispositif informatique d'un véhicule automobile, fait que le dispositif informatique effectue les stades suivants :
- détermination de données d'au moins un premier environnement du véhicule automobile au moyen d'au moins un premier dispositif de détermination du véhicule automobile,
- établissement d'une carte numérique à partir des données déterminées du au moins un premier environnement du véhicule automobile au moyen d'un dispositif d'établissement,
- détermination d'au moins un premier indicateur de confiance pour la carte numérique au moyen d'un deuxième dispositif de détermination,
- mémorisation de la carte numérique, qui a été établie, et du au moins un premier indicateur de confiance, qui a été déterminé, au moyen d'un dispositif de mémorisation,
- mise à disposition d'un horizon électronique pour le véhicule automobile dans au moins une unité informatique du véhicule automobile,
- détermination au moins d'un deuxième indicateur de confiance pour l'horizon électronique au moyen d'un troisième dispositif de détermination,
- détermination d'une première position instantanée du véhicule automobile au moyen d'un quatrième dispositif de détermination,
- mise à disposition, au moyen d'un cinquième dispositif de détermination, d'informations sur un deuxième environnement du véhicule automobile dans l'horizon électronique, se trouvant dans la zone de la première position instantanée du véhicule automobile, qui a été déterminée,
- détermination d'au moins un troisième indicateur de confiance au moyen du au moins un premier indicateur de confiance et du au moins un deuxième indicateur de confiance, au moyen d'un sixième dispositif de détermination,
- utilisation de la carte numérique, qui a été établie, et/ou des informations, mises à disposition dans l'horizon électronique, dans au moins un système d'assistance à la conduite du véhicule automobile, en fonction du au moins un troisième indicateur de confiance,
**caractérisé en ce que** le programme d'ordinateur fait, en outre, que le dispositif informatique effectue les stades suivants :
- comparaison des informations, mises à disposition dans l'horizon électronique, à la carte numérique, qui a été établie, dans la zone du deuxième environnement du véhicule automobile au moyen d'un dispositif de comparaison,
- modification, au moyen d'un dispositif de modification, du au moins un premier indicateur de confiance et du au moins un deuxième indicateur de confiance en fonction de la comparaison des informations, qui ont été mises à disposition, à la carte numérique, qui a été établie.

15. Support déchiffrable par ordinateur, sur lequel est mémorisé un programme d'ordinateur suivant la revendication 14.
